# FASCICULE DE BREVET EUROPEEN

(11) **EP 3 330 608 B1**
(45) Date de publication et mention de la délivrance du brevet: **31.03.2021**
(21) Numéro de dépôt: 16202234.7
(22) Date de dépôt: 05.12.2016
(51) Int. Cl.: F21V 23/04, F21V 21/084, F21V 33/00

(54) **LAMPE CONNECTEE ET PROCEDE DE COMMANDE DE LA LAMPE**
ANGESCHLOSSENE LAMPE UND STEUERVERFAHREN DER LAMPE
CONNECTED LAMP AND METHOD FOR CONTROLLING THE LAMP

(43) Date de publication de la demande: 06.06.2018
(73) Titulaire: The Swatch Group Research and Development Ltd, 2074 Marin (CH)
(72) Inventeur: Bazin, Jean-Luc, 2512 Tüscherz-Alfermée (CH); Gracia, Jean-Claude, 2572 Mörigen (CH)
(74) Mandataire: Supper, Marc

(56) Documents cités:
- EP-A1- 1 811 226
- EP-A2- 2 378 186
- WO-A1-2015/121429
- WO-A1-2015/121433
- CN-A- 105 065 962
- DE-U1-202005 015 809
- US-A1- 2016 097 499

## Description

### Domaine de l'invention

L'invention se rapporte à une lampe connectée et à un procédé de commande d'une lampe connectée. L'invention se rapporte également à une montre permettant de commander une telle lampe connectée.

### Arrière-plan de l'invention

Lorsqu'un coureur ou un cycliste se déplace dans la nuit, il utilise une lampe pour se diriger. Malgré cela, toute son attention doit être portée sur le chemin qu'il parcourt, de sorte qu'il doit s'arrêter pour consulter sa montre ou un GPS, ce qui est contraignant, en particulier lors de trails ou de courses.

En outre, la lampe d'un sportif est souvent disposée sur sa tête ou sur son vélo, de sorte qu'elle est difficilement accessible lorsqu'il se déplace, en particulier à grande vitesse ou sur terrain accidenté Le document EP 1 811 226 A1 décrit une lampe portable comportant des moyens d'éclairage configurés pour émettre une lumière, les moyens d'éclairage comportant des moyens d'émission d'au moins un faisceau lumineux et des moyens de projection agencés pour projeter au moins un motif lumineux.

Le document WO 2015/121433 A1 décrit une lampe frontale connectée.

### Résumé de l'invention

L'invention vise à remédier aux inconvénients de l'état de la technique en proposant une lampe portable connectée pour sportif dont la lumière émise est contrôlée par un accessoire tiers, et en particulier par une montre.

Un autre objet de l'invention est de proposer une lampe portable pour sportif permettant de projeter des données envoyées par un objet extérieur connecté par une liaison sans fil à la lampe.

Plus précisément, un premier aspect de l'invention concerne une lampe portable connectée comportant :
- Des moyens d'éclairage configurés pour émettre une lumière, les moyens d'éclairage comportant :
   ∘ des moyens d'émission d'au moins un faisceau lumineux ;
   ∘ des moyens de projection agencés pour projeter au moins un motif lumineux ;
- Des moyens de réception configurés pour recevoir, via une liaison sans fil, des instructions de commande, les instructions de commande comportant des données à projeter;
- Des moyens de commande configurés pour contrôler les moyens de projection de façon à ce qu'ils projettent les données reçues par les moyens de réception, ladite lampe portable étant une lampe frontale.

La lampe peut ainsi recevoir d'un objet connecté des données à projeter.

Cet objet connecté est de préférence une montre qui permet d'envoyer à la lampe des données relatives au temps, à la date, à la vitesse du sportif, à son accélération, ou encore des données de chronométrage.

L'objet connecté peut également être un téléphone portable qui permet d'envoyer des données relatives à la position du sportif, par exemple sous la forme de données GPS, ou des données relatives à un appel entrant ou sortant.

L'objet connecté peut également être un portique sous lequel le sportif passe lors d'une course, les données reçues dans ce cas peuvent être relatives à la position du sportif au sein de la course, ou encore à sa vitesse, ou à sa distance de la ligne d'arrivée.

La lampe selon le premier aspect de l'invention peut également présenter une ou plusieurs des caractéristiques ci-après prises individuellement ou selon toutes les combinaisons techniquement possible :
- la lampe peut être une lampe pour vélo ;
- la lampe présente des dimensions extérieures inférieures à 6 cm ;
- la lampe présente un poids inférieur à 200g, et de préférence inférieur à 100g ;
- la lampe comporte de préférence des moyens de fixation : ces moyens de fixation peuvent être un bandeau de fixation agencé pour fixer la lampe sur la tête d'un sportif ou une attache configurée pour fixer la lampe sur un vélo ;
- les moyens de projection comportent de préférence un projecteur à balayage laser ;
- le projecteur à balayage laser comporte de préférence :
   ▪ un module photonique comportant trois lasers primaires émettant respectivement un faisceau laser vert, rouge et bleu;
   ▪ au moins un miroir à balayage ;
   ▪ un module électronique configuré pour contrôler les lasers et le miroir.
- la lampe peut comporter des moyens de transmission agencés pour envoyer à un objet connecté, via une liaison sans fil, des paramètres relatifs à l'état de la lampe ;
- la lampe peut comporter des capteurs de mesure de paramètres relatifs à l'état de la lampe ;
- les moyens de commande peuvent être aptes à contrôler les caractéristiques de la lumière émise par les moyens d'éclairage en fonction des instructions de commande reçues ;
- la lampe peut également comporter un processeur configuré pour générer des données à projeter ;
- la lampe peut également comporter une mémoire configurée pour stocker des données à projeter.

Un aspect de la présente divulgation, non couvert par les revendications, concerne une montre connectée configurée pour commander une lampe, la montre comportant :
- un processeur configuré pour générer des instructions de commande à envoyer à la lampe;
- une interface utilisateur configurée pour permettre à un utilisateur de contrôler les instructions de commande générées par le processeur en entrant une séquence d'actionnement dans l'interface utilisateur;
- des moyens de transmission configurés pour envoyer, via une liaison sans fil, les instructions de commande à la lampe.

La montre permet donc de commander les fonctions d'une lampe à distance, de sorte que l'utilisateur a seulement besoin d'avoir accès à sa montre pour commander sa lampe.

La montre selon cet aspect de la présente divulgation peut également présenter une ou plusieurs des caractéristiques ci-après prises individuellement ou selon toutes les combinaisons techniquement possibles :
- le processeur peut être configuré pour générer les instructions de commande à envoyer à la lampe en fonction de paramètres générés par la montre;
- la montre peut comporter des moyens de réception sans fil configurés pour recevoir via une liaison sans fil des paramètres envoyés par une lampe, le processeur étant en outre configuré pour générer les instructions de commande à envoyer à la lampe en fonction des paramètres reçus par les moyens de réception sans fil de la montre ;
- l'interface utilisateur comporte de préférence au moins un bouton poussoir, le processeur étant configuré pour générer des instructions de commande en réponse à un actionnement du bouton poussoir selon une séquence d'actionnement prédéterminée ;
- la montre comporte une mémoire dans laquelle sont stockées des instructions de commande associées à chaque séquence d'actionnement.

Un deuxième aspect de l'invention concerne un ensemble comportant une lampe selon le premier aspect de l'invention et une montre selon l'aspect de la présente divulgation.

Un troisième aspect de l'invention concerne un procédé de commande d'une lampe portable connectée selon la revendication 1, la lampe comportant des moyens d'éclairage configurés pour émettre une lumière, les moyens d'éclairage comportant :
- des moyens d'émission d'au moins un faisceau lumineux ;
- des moyens de projection agencés pour projeter au moins un motif lumineux ;
le procédé comportant les étapes suivantes :
- Etablissement d'une liaison sans fil entre la lampe et l'objet connecté ;
- Réception par la lampe d'instructions de commande envoyées par l'objet connecté via la liaison sans fil, les instructions de commande comportant des données à projeter;
- Contrôle des moyens de projection de façon à ce qu'ils projettent les données à projeter, lesdites instructions de commande comportant des instructions relatives aux caractéristiques du motif projeté et l'étape de contrôle des moyens de projection est réalisée de façon à ce que le motif projeté présente des caractéristiques conformes aux instructions de commande.

Le procédé selon le troisième aspect de l'invention peut également présenter une ou plusieurs des caractéristiques ci-après prises individuellement ou selon toutes les combinaisons techniquement possibles :
- Les caractéristiques du motif projeté peuvent être son intensité, sa(ses) couleur(s), ses dimensions ;
- Les instructions de commande peuvent comporter des instructions relatives aux caractéristiques du faisceau lumineux, le procédé comportant une étape de contrôle des moyens d'émission de l'au moins un faisceau lumineux de façon à ce que le au moins un faisceau lumineux présente des caractéristiques conformes aux instructions de commande ;
- Les caractéristiques du ou des faisceaux lumineux peuvent être son(leur) intensité(s), sa(leur) couleur(s), ses(leurs) dimensions.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 représente schématiquement une lampe connectée selon un mode de réalisation ;
- la figure 2 représente schématiquement une montre connectée;
- La figure 3 représente schématiquement les étapes d'un procédé de commande selon un mode de réalisation de l'invention ;
- La figure 4 représente schématiquement une lumière émise par une lampe en réponse à un procédé selon un mode de réalisation de l'invention.

### Description détaillée d'un mode de réalisation

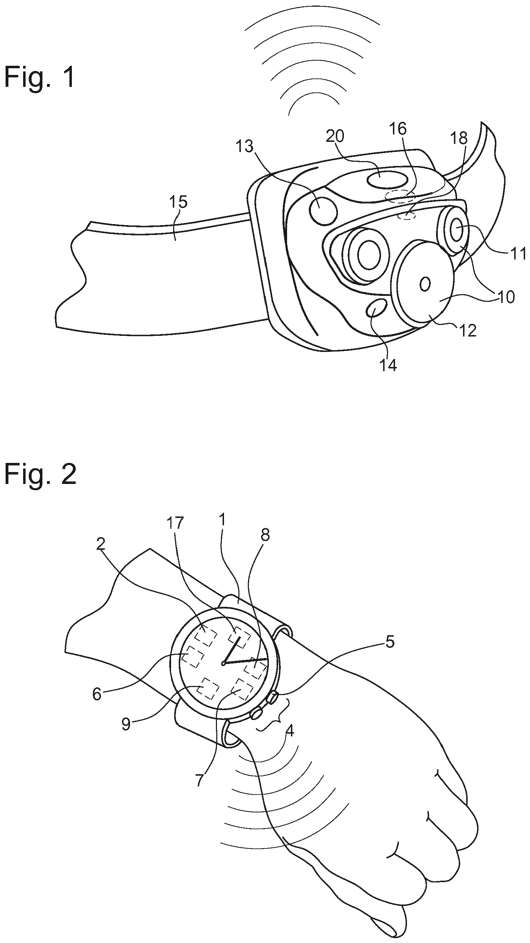

La figure 1 représente une lampe portable 3 selon un mode de réalisation de l'invention. Cette lampe portable 3 est une lampe pour les sportifs, et de préférence une lampe frontale ou une lampe destinée à être fixée sur un vélo.

La lampe portable 3 comporte des moyens d'éclairage 10 configurés pour émettre une lumière. Ces moyens d'éclairage 10 comportent des moyens d'émission 11 d'au moins un faisceau lumineux. Ces moyens d'émission d'un faisceau lumineux peuvent par exemple comporter une ou plusieurs diodes électroluminescentes.

Les moyens d'éclairage 10 comportent également des moyens de projection 12 agencés pour projeter au moins un motif lumineux. Les moyens de projection sont agencés pour projeter un motif de type affichage tête haute (également appelé « head up display » en anglais). Ces moyens de projection 12 comportent de préférence un projecteur à balayage laser. Un tel projecteur est avantageux car il permet d'avoir une bonne focalisation quelle que soit la distance de projection. Ce projecteur à balayage laser comporte de préférence :
- Un module photonique comportant trois lasers primaires, émettant respectivement un faisceau laser vert, rouge et bleu ;
- Au moins un miroir à balayage ;
- Un module électronique configuré pour contrôler les lasers et le miroir.

La lampe portable 3 comporte également des moyens de communication configurés pour communiquer via une liaison sans fil avec les moyens de communication d'une montre.

Les moyens de communication de la lampe comportent des moyens de réception 13 agencés pour recevoir via une liaison sans fil des instructions de commande envoyées par la montre. Ces moyens de réception peuvent être un récepteur bluetooth, bluetooth basse énergie, ou encore un récepteur optique, en fonction de la liaison sans fil utilisée.

Les moyens de communication de la lampe peuvent également comporter des moyens de transmission 14 configurés pour transmettre à la montre, via une liaison sans fil, des paramètres, et notamment des paramètres sur l'état de la lampe. Ces moyens de transmission 14 peuvent être un émetteur bluetooth, bluetooth basse énergie, ou encore un émetteur optique, en fonction de la liaison sans fil utilisée.

La lampe comporte également une pile ou une batterie agencée pour alimenter les moyens d'éclairage et les moyens de communication de la montre.

La lampe peut également comporter au moins un capteur configuré pour mesurer :
- des paramètres relatifs à la lampe, comme par exemple l'état de charge de la batterie ou de la pile, l'intensité lumineuse émise, etc et/ou
- des paramètres relatifs à l'environnement extérieur, comme par exemple l'altitude, la température, la vitesse, les coordonnées GPS, etc.

La lampe comporte également des moyens de commande 18 agencés pour contrôler la lumière émise par les moyens d'éclairage en fonction des instructions de commande reçues.

Plus précisément, les moyens de commande 18 sont configurés pour commander les moyens de projections de façon à ce qu'ils projettent les données reçues par les moyens de réception 13.

Les moyens de commande 18 peuvent en outre être configurés de façon à ce qu'ils commandent, en fonction des instructions reçues par les moyens de réception :
- les caractéristiques de la lumière émise par les moyens d'émission 11 du (des) faisceaux lumineux, et notamment son(leur) intensité(s), sa(leurs) couleur(s), sa(leur) direction(s), ses(leurs) dimensions ;
- les caractéristiques du motif projeté par les moyens de projection 12, et notamment son intensité, sa(ses) couleur(s), sa direction, ses dimensions ;

La lampe peut également une interface utilisateur 20 qui permet à l'utilisateur d'allumer la lampe et/ou d'autoriser les connexions de la lampe avec un objet connecté extérieur à la lampe. Cette interface utilisateur 20 comporte de préférence un bouton.

La lampe portable 3 comporte également des moyens de fixation. Dans ce mode de réalisation, les moyens de fixation comportent un bandeau 15 permettant de fixer la lampe frontale sur le front d'un utilisateur.

La lampe 3 permet de projeter des données reçues au moyen d'une liaison sans fil et envoyées par un objet connecté à la lampe.

Cet objet connecté peut par exemple être un téléphone portable qui permet d'envoyer des données relatives à la position du sportif, par exemple sous la forme de données GPS, ou des données relatives à un appel entrant ou sortant.

L'objet connecté peut également être un portique sous lequel le sportif passe lors d'une course, les données reçues dans ce cas peuvent être relatives à la position du sportif au sein de la course, ou encore à sa vitesse, ou à sa distance de la ligne d'arrivée.

Selon un mode de réalisation préférentiel, cet objet connecté peut être une montre qui permet d'envoyer à la lampe des données relatives au temps, à la date, à la vitesse du sportif, à son accélération, ou encore des données de chronométrage.

Ainsi, la figure 2 représente une montre connectée pour un ensemble comportant ladite montre et une lampe selon l'invention. La montre connectée comprend un processeur 2 configuré pour générer des instructions de commande à envoyer à une lampe portable 3.

La montre 1 comporte également une interface utilisateur 4 configurée pour permettre à un utilisateur de contrôler les instructions générées par le processeur 2. L'interface utilisateur 4 peut par exemple comporter un ou plusieurs des éléments suivants :
- un bouton poussoir,
- une couronne.

Dans cet exemple, l'interface utilisateur comporte deux boutons poussoirs 5.

La montre comporte également une mémoire 6 dans laquelle sont mémorisées des séquences d'actionnement de l'interface utilisateur associées à des instructions de commande du processeur 2.

Le processeur 2 est configuré pour générer des instructions de commande en fonction des séquences d'actionnement entrées dans l'interface utilisateur 4 par l'utilisateur, et aussi en fonction de données générées par la montre, comme l'heure, la date, la vitesse du sportif, son accélération, ses calories perdues...

La montre comporte également des moyens de communication sans fil configurés pour communiquer, via une liaison sans fil, avec une lampe portable 3. Cette liaison sans fil peut par exemple être une liaison Bluetooth, une liaison Bluetooth basse énergie (également appelée BLE pour « BLuetooth Low Energy »), une liaison optique.

Les moyens de communication de la montre comportent des moyens de transmission 7 configurés pour transmettre à la lampe portable 3, via une liaison sans fil, des données, et notamment les instructions de commande générées par le processeur. Ces moyens de transmission 7 peuvent être un émetteur bluetooth, bluetooth basse énergie, ou encore un émetteur optique, en fonction de la liaison sans fil utilisée.

Les moyens de communication de la montre peuvent également comporter des moyens de réceptions 8 agencés pour recevoir via une liaison sans fil des paramètres envoyés par la lampe. Ces moyens de réception peuvent être un récepteur bluetooth, bluetooth basse énergie, ou encore un récepteur optique, en fonction de la liaison sans fil utilisée.

La montre comporte également une pile ou une batterie 17 agencée pour alimenter le processeur 2 et les moyens de communication de la montre.

La montre est apte à générer des données, comme par exemple l'heure ou la date. Elle peut également comporter des capteurs 9 permettant de mesurer des données additionnelles, comme par exemple la vitesse de déplacement du porteur de la montre, son accélération, son altitude, la température extérieure, sa position GPS.

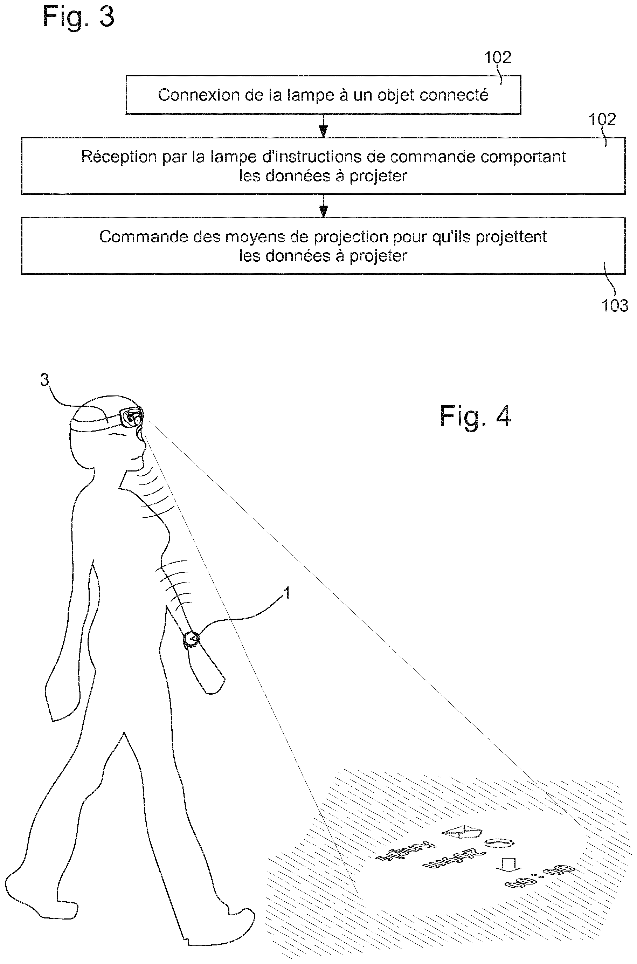

Un procédé de commande de la lampe de la figure 1 par la montre de la figure 2 va maintenant être décrit en référence aux figures 3 et 4.

Le procédé comporte de préférence une première étape 101 de connexion de la lampe 3 à la montre 1. Cette première étape a pour but d'autoriser ou non la prise de commande de la lampe par la montre et les communications entre la montre et la lampe. Plus précisément, la montre peut envoyer à la lampe une requête de connexion via la liaison sans fil. L'utilisateur peut ensuite intervenir sur l'interface utilisateur 20 de la lampe pour signifier son accord ou sur refus de connexion. Lorsque l'utilisateur actionne l'interface utilisateur de façon à accepter la connexion entre la lampe 3 et la montre 1, une liaison sans fil est établie entre la lampe et la montre.

Le procédé peut ensuite comporter une étape de réception, via l'interface utilisateur 4 de la montre 1, d'une séquence d'actionnement. Chaque séquence d'actionnement correspond à une commande de la lampe.

Ainsi, on peut par exemple enregistrer dans la mémoire de la montre des séquences d'actionnement pour effectuer une ou plusieurs des actions suivantes sur la lampe :
- allumer ou éteindre la lampe ;
- commander l'intensité, la couleur ou encore la direction du ou des faisceaux lumineux émis ;
- commander un motif qui sera projeté par les moyens de projection de la lampe.

On peut par exemple choisir de projeter :
- des données générées par la montre et/ou par la lampe,
- des données mesurées par un capteur de la montre ou de la lampe,
- des données calculées par le processeur de la montre à partir de paramètres issus de la montre, et/ou de la lampe, et/ou d'un ou plusieurs de leurs capteurs ;
- des données calculées par le processeur de la lampe à partir de paramètres issus de la montre, et/ou de la lampe, et/ou d'un ou plusieurs de leurs capteurs.

Après que l'utilisateur ait entré dans l'interface utilisateur de la montre une séquence d'actionnement, le procédé comporte une étape de génération par le processeur 2 de la montre d'instructions de commande correspondantes. Les instructions de commande comportent des données à projeter.

Le procédé comporte ensuite une étape d'envoi, par les moyens de transmission de la montre, des instructions de commande.

Le procédé comporte ensuite une étape 102 de réception des instructions de commande par les moyens de réception 13 de la lampe.

Le procédé comporte ensuite une étape 103 de commande, par les moyens de commande 18 de la lampe des moyens d'éclairage 10 de la lampe en fonction des instructions de commande reçues.

Plus précisément, lors de cette étape, les moyens de commande 18 commandent les moyens de projection 12 de façon à ce qu'ils projettent les données reçues par les moyens de réception de la lampe.

Les moyens de commande commandent les caractéristiques du motif projeté et peuvent commander celles du ou des faisceaux lumineux émis.

Le procédé peut également comporter une étape de surveillance de l'état de charge de la batterie ou de la pile de la lampe 3.

Lorsque la charge de la batterie ou de la pile de la lampe 3 est inférieure à une charge seuil, par exemple lorsqu'elle est égale à 10% de la capacité de charge totale de la batterie ou de la pile de la lampe 3, le procédé peut comporter une étape de demande d'instructions de préservation de la charge à l'utilisateur. Cette demande d'instructions peut être directe, c'est-à-dire qu'elle se fait directement par la lampe, qui peut par exemple émettre une lumière clignotante pour signaler à l'utilisateur qu'il doit agir, ou bien elle peut être indirecte, c'est-à-dire qu'elle peut se faire par l'intermédiaire de l'objet connecté, à qui la lampe envoie via la liaison sans fil une demande d'instructions qui sera ensuite transmise à l'utilisateur via l'objet connecté.

L'utilisateur peut alors choisir soit de désactiver les moyens de projection pour ne conserver que les moyens d'émission du faisceau lumineux ou inversement de désactiver les moyens d'émission du faisceau lumineux pour ne converser que les moyens de projection. Alternativement, l'utilisateur peut également choisir de conserver activés à la fois les moyens d'émission du faisceau lumineux et les moyens de projection.

Les instructions de préservation de la charge sont ensuite transmises aux moyens de commande 18 de la lampe qui agissent en conséquence sur les moyens d'émission du faisceau lumineux et/ou sur les moyens de projection.

En référence à la figure 4, le procédé permet donc notamment d'émettre au moins un faisceau lumineux 21 dont les caractéristiques peuvent être commandées par l'intermédiaire d'un objet connecté. En outre le procédé permet, grâce au motif projeté 22, d'afficher des informations lumineuses.

Le procédé permet donc de commander à distance les fonctions d'une lampe par l'intermédiaire d'une montre connectée. Le procédé permet notamment de choisir grâce à une montre quelles informations projeter avec la lampe. Le procédé permet donc au porteur d'accéder à un affichage tête haute.

Naturellement, l'invention n'est pas limitée aux exemples décrits en référence aux figures et des variantes pourraient être envisagées sans sortir du cadre de l'invention. On pourrait notamment utiliser un autre objet qu'une montre pour envoyer les informations à projeter. On pourrait également envisager d'afficher d'autres paramètres que ceux cités, comme par exemple les calories dépensées par un sportif, sa distance à la ligne d'arrivée, ses coordonnées GPS, des encouragements de proches reçus par SMS.

## Revendications

1. Lampe portable (3) connectée comportant :
- des moyens d'éclairage (10) configurés pour émettre une lumière, les moyens d'éclairage comportant :
▪ des moyens d'émission (11) d'au moins un faisceau lumineux ;
▪ des moyens de projection (12) agencés pour projeter au moins un motif lumineux ;
- des moyens de réception (13) configurés pour recevoir, via une liaison sans fil, des instructions de commande, les instructions de commande comportant des données à projeter;
- des moyens de commande (18) configurés pour contrôler les moyens de projection (12) de façon à ce qu'ils projettent les données reçues par les moyens de réception (13), ladite lampe portable étant une lampe frontale.

2. Lampe portable selon l'une des revendications précédentes, dans laquelle les moyens de projection (12) comportent un projecteur à balayage laser.

3. Lampe portable selon la revendication précédente, dans laquelle le projecteur à balayage laser comporte:
- un module photonique comportant trois lasers primaires émettant respectivement un faisceau laser vert, rouge et bleu;
- au moins un miroir à balayage ;
- un module électronique configuré pour contrôler les lasers et le miroir.

4. Lampe selon l'une des revendications précédentes dans laquelle les moyens de commande (18) sont configurés pour contrôler les caractéristiques de la lumière émise par les moyens d'éclairage en fonction des instructions de commande reçues.

5. Lampe selon l'une des revendications précédentes, comportant des moyens de transmission agencés pour envoyer à un objet connecté, via une liaison sans fil, des paramètres relatifs à l'état de la lampe.

6. Lampe selon l'une des revendications précédentes, comportant des capteurs de mesure de paramètres relatifs à l'état de la lampe.

7. Lampe selon l'une des revendications précédentes, dans laquelle les moyens de commande sont aptes à contrôler les caractéristiques de la lumière émise par les moyens d'éclairage en fonction des instructions de commande reçues.

8. Lampe selon l'une des revendications précédentes, comportant un processeur configuré pour générer des données à projeter.

9. Lampe selon l'une des revendications précédentes, comportant une mémoire configurée pour stocker des données à projeter.

10. Ensemble comportant une lampe selon l'une des revendications précédentes et une montre connectée configurée pour commander la lampe, la montre comportant :
- un processeur (2) configuré pour générer des instructions de commande à envoyer à la lampe (3);
- une interface utilisateur (4) configurée pour permettre à un utilisateur de contrôler les instructions de commande générées par le processeur en entrant une séquence d'actionnement dans l'interface utilisateur;
- des moyens de transmission (7) configurés pour envoyer, via une liaison sans fil, les instructions de commande à la lampe.

11. Procédé de commande d'une lampe portable (3) connectée selon la revendication 1, la lampe comportant des moyens d'éclairage (10) configurés pour émettre une lumière, les moyens d'éclairage (10) comportant
- des moyens d'émission d'au moins un faisceau lumineux ;
- des moyens de projection agencés pour projeter au moins un motif lumineux ;
le procédé comportant les étapes suivantes :
- établissement d'une liaison sans fil entre la lampe et un objet connecté;
- réception par la lampe d'instructions de commande envoyées par un objet connecté via la liaison sans fil, les instructions de commande comportant des données à projeter;
- contrôle des moyens de projection (12) de façon à ce qu'ils projettent les données à projeter, lesdites instructions de commande comportant des instructions relatives aux caractéristiques du motif projeté et l'étape de contrôle des moyens de projection (12) est réalisée de façon à ce que le motif projeté présente des caractéristiques conformes aux instructions de commande.

12. Procédé selon la revendication précédente, dans lequel les instructions de commande comportent des instructions relatives aux caractéristiques du faisceau lumineux, le procédé comportant une étape de contrôle des moyens d'émission de l'au moins un faisceau lumineux de façon à ce que le au moins un faisceau lumineux présente des caractéristiques conformes aux instructions de commande.

## Patentansprüche

1. Verbindbare tragbare Lampe (3), umfassend:
- Beleuchtungsmittel (10), die so konfiguriert sind, dass sie Licht emittieren, wobei die Beleuchtungsmittel umfassen:
• Mittel (11) zum Emittieren mindestens eines Lichtstrahls;
• Projektionsmittel (12), die dazu vorgesehen sind, mindestens ein Lichtmuster zu projizieren;
- Empfangsmittel (13), die so konfiguriert sind, dass sie über eine drahtlose Verbindung Steuerbefehle empfangen, wobei die Steuerbefehle zu projizierende Daten enthalten;
- Steuermittel (18), die so konfiguriert sind, dass sie die Projektionsmittel (12) derart steuern, dass sie die von den Empfangsmitteln (13) empfangenen Daten projizieren, wobei die tragbare Lampe eine Stirnlampe ist.

2. Tragbare Lampe nach einem der vorhergehenden Ansprüche, wobei die Projektionsmittel (12) einen Projektor mit Laserabtastung umfassen.

3. Tragbare Lampe nach dem vorhergehenden Anspruch, wobei der Projektor mit Laserabtastung umfasst:
- ein Photonenmodul mit drei primären Lasern, die jeweils einen grünen, einen roten bzw. einen blauen Laserstrahl emittieren;
- mindestens einen Abtastspiegel;
- ein elektronisches Modul, das konfiguriert ist, um die Laser und den Spiegel zu steuern.

4. Lampe nach einem der vorhergehenden Ansprüche, wobei die Steuermittel (18) so konfiguriert sind, dass sie die Eigenschaften des durch die Beleuchtungsmittel emittierten Lichts abhängig von den empfangenen Steuerbefehlen steuern.

5. Lampe nach einem der vorhergehenden Ansprüche mit Übertragungsmitteln, die dazu vorgesehen sind, an ein gekoppeltes Objekt über eine drahtlose Verbindung Parameter bezüglich des Zustands der Lampe zu senden.

6. Lampe nach einem der vorhergehenden Ansprüche, umfassend Sensoren zum Messen von Parametern bezüglich des Zustands der Lampe.

7. Lampe nach einem der vorhergehenden Ansprüche, wobei die Steuermittel geeignet sind, die Eigenschaften des von den Beleuchtungsmitteln emittierten Lichts abhängig von den empfangenen Steuerbefehlen zu steuern.

8. Lampe nach einem der vorhergehenden Ansprüche mit einem Prozessor, der so konfiguriert ist, dass er zu projizierende Daten erzeugt.

9. Lampe nach einem der vorhergehenden Ansprüche mit einem Speicher, der so konfiguriert ist, dass er zu projizierende Daten speichert.

10. Ensemble mit einer Lampe nach einem der vorhergehenden Ansprüche und einer verbindbaren tragbaren Uhr, die konfiguriert ist, um die Lampe zu steuern, wobei die tragbare Uhr umfasst:
- einen Prozessor (2), der so konfiguriert ist, dass er Steuerbefehle erzeugt, die an die Lampe (3) zu senden sind;
- eine Benutzerschnittstelle (4), die so konfiguriert ist, dass sie einem Benutzer ermöglicht, die vom Prozessor erzeugten Steuerbefehle durch Eingabe einer Betätigungssequenz in die Benutzerschnittstelle zu steuern;
- Übertragungsmittel (7), die konfiguriert sind, um die Steuerbefehle über eine drahtlose Verbindung an die Lampe zu senden.

11. Verfahren zum Steuern einer verbindbaren tragbaren Lampe (3) nach Anspruch 1, wobei die Lampe Beleuchtungsmittel (10) umfasst, die so konfiguriert sind, dass sie Licht emittieren, wobei die Beleuchtungsmittel (10) umfassen:
- Mittel zum Emittieren mindestens eines Lichtstrahls;
- Projektionsmittel, die dazu vorgesehen sind, mindestens ein Lichtmuster zu projizieren;
wobei das Verfahren die folgenden Schritte umfasst:
- Aufbauen einer drahtlosen Verbindung zwischen der Lampe und einem verbindbaren Objekt;
- Empfangen von Steuerbefehlen, die von einem über die drahtlose Verbindung gekoppelten Objekt gesendet werden, durch die Lampe, wobei die Steuerbefehle zu projizierende Daten enthalten;
- Steuern der Projektionsmittel (12) derart, dass sie die zu projizierenden Daten projizieren,
wobei die Steuerbefehle Befehle bezüglich der Eigenschaften des projizierten Musters enthalten und der Schritt des Steuerns der Projektionsmittel (12) so durchgeführt wird, dass das projizierte Muster die Eigenschaften entsprechend den Steuerbefehlen aufweist.

12. Verfahren nach dem vorhergehenden Anspruch, wobei die Steuerbefehle Befehle bezüglich der Eigenschaften des Lichtstrahls enthalten, wobei das Verfahren einen Schritt zum Steuern der Mittel zum Emittieren mindestens eines Lichtstrahls umfasst, so dass der mindestens eine Lichtstrahl Eigenschaften entsprechend den Steuerbefehlen aufweist.

## Claims

1. Portable connected lamp (3) including:
- lighting means (10) configured to transmit a light, the lighting means including:
▪ means (11) for transmitting at least one light beam;
▪ projection means (12) arranged to project at least one light pattern;
- reception means (13) configured to receive control instructions via a wireless connection, the control instructions including data to be projected;
- control means (18) configured to control the projection means (12) so that they project the data received by the reception means (13), said portable lamp being a head lamp.

2. Portable lamp according to any of the preceding claims, wherein the projection means (12) include a laser scanning projector.

3. Portable lamp according to the preceding claim, wherein the laser scanning projector includes:
- a photonic module including three primary lasers respectively transmitting green, red and blue laser beams;
- at least one scanning mirror;
- an electronic module configured to control the lasers and the mirror.

4. Lamp according to any of the preceding claims, wherein the control means (18) are configured to control the features of the light transmitted by the lighting means according to the control instructions received.

5. Lamp according to any of the preceding claims, including transmission means arranged to send to a connected object, via a wireless connection, parameters relating to the state of the lamp.

6. Lamp according to any of the preceding claims, including sensors measuring parameters relating to the state of the lamp.

7. Lamp according to any of the preceding claims, wherein the control means are able to control the features of the light transmitted by the lighting means according to the control instructions received.

8. Lamp according to any of the preceding claims, including a processor configured to generate data to be projected.

9. Lamp according to any of the preceding claims, including a memory configured to store data to be projected.

10. Assembly including a lamp according to any of the preceding claims and a connected watch configured to control the lamp, the watch including:
- a processor (2) configured to generate control instructions to be sent to the lamp (3);
- a user interface (4) configured to allow a user to control the control instructions generated by the processor by inputting an actuation sequence in the user interface;
- transmission means (7) configured to send the control instructions to the lamp via a wireless connection.

11. Method for controlling a portable connected lamp (3) according to claim 1, the lamp including lighting means (10) configured to transmit a light, the lighting means (10) including
- means for transmitting at least one light beam;
- projection means arranged to project at least one light pattern;
the method including the following steps:
- establishing a wireless connection between the lamp and the connected object;
- reception by the lamp of control instructions sent by the connected object via the wireless connection, the control instructions including data to be projected;
- controlling the projection means (12) so that they project the data to be projected.
said control instructions including instructions relating to the features of the projected pattern and the step of controlling the projection means (12) is carried out so that the projected pattern has features conforming to the control instructions.

12. Method according to the preceding claim, wherein the control instructions include instructions relating to the features of the light beam, the method including a step of controlling the transmission means of the at least one light beam so that the at least one light beam exhibits features conforming to the control instructions.
